# EUROPEAN PATENT SPECIFICATION

(11) **EP 2 784 285 B1**
(45) Date of publication and mention of the grant of the patent: **17.02.2016**
(21) Application number: 14161996.5
(22) Date of filing: 27.03.2014
(51) Int. Cl.: F02B 29/04, F01P 3/18, F01P 3/20, F01P 7/16

(54) **System for cooling a gaseous intake fluid for an internal combustion engine, integrated into a cooling circuit of the engine**
System zum Kühlen eines gasförmigen Einlassfluids für einen Verbrennungsmotor, integriert in einem Kühlkreislauf des Verbrennungsmotors
Système de refroidissement d'un fluide d'admission gazeux pour un moteur à combustion interne, intégré dans un circuit de refroidissement du moteur

(30) Priority: 29.03.2013 IT TO20130262
(43) Date of publication of application: 01.10.2014
(73) Proprietor: DENSO THERMAL SYSTEMS S.p.A., 10046 Poirino (Torino) (IT)
(72) Inventor: Nakamura, Masaya, 10046 Poirino (Torino) (IT); Massano, Cristiano, 10046 Poirino (Torino) (IT); Biglia, Matteo, 10046 Poirino (Torino) (IT)
(74) Representative: Vanzini, Christian

(56) References cited:
- WO-A1-02/48516
- WO-A1-03/069149
- DE-A1- 10 227 929

## Description

The present invention relates in a general way to systems for the treatment of the gaseous fluids (air or mixtures of air and recycled exhaust gas) taken into supercharged internal combustion engines.

As a general rule, a dedicated cooling system is provided for cooling the air or gas-air mixtures supplied to internal combustion engines, this system having a pump for circulating the cooling fluid, and being separate from the engine cooling system.

Because of the presence of the two circuits, there is a large number of components, the arrangement of which in the engine compartment may be extremely difficult, and production costs are high. These problems are particularly troublesome in the case of compact motor vehicles. Consequently there is a need to integrate the engine cooling circuit with the cooling circuit for the intake air or mixture.

WO 03/042619 describes a system for controlling the heat energy developed by an internal combustion engine, which may provide a response to the need expressed above. One of the solutions described in WO 03/042619 comprises a heat exchange module composed of a pair of radiators, one for the engine cooling circuit and the other for the intake air cooling circuit, arranged in a double layer configuration. There is a single inlet for the cooling fluid, while the heat exchange module has two separate outlets, one for the engine cooling circuit and the other for the intake air cooling circuit. Consequently, some of the fluid passing through the first radiator also passes through the second radiator. The fluid is circulated within the engine cooling circuit and the intake air cooling circuit by corresponding pumps.

Another integrated cooling apparatus, having a similar architecture to that of WO 03/042619 but using a single pump, is described in US 2009/0301411.

The systems described above may be more compact than solutions in which the two cooling circuits are completely separated. However, it is desirable to provide further integration between the engine cooling circuit and the intake air cooling circuit, to achieve a further reduction of dimensions and costs.

The invention therefore proposes a cooling apparatus for a supercharged internal combustion engine, comprising a circuit provided with a pump for circulating a cooling fluid between the internal combustion engine and a cooling radiator which exchanges heat with external atmospheric air, said cooling radiator having a main outlet connected to a suction side of said pump,
said apparatus further comprising a conduit for cooling a gaseous intake fluid for said engine, said conduit comprising a low temperature radiator which exchanges heat with external atmospheric air, and which is connected to a secondary outlet of said cooling radiator, this outlet being different from said main outlet, and a cooler which cools said gaseous intake fluid by means of a heat exchange with said cooling fluid, connected to an outlet of said low temperature radiator, an outlet of said cooler being connected to a suction side of said pump, downstream of the main outlet of the cooling radiator,
wherein said cooling radiator and low temperature radiator are combined in a two-pass heat exchange unit comprising a first and a second header and a tube bundle extending between said headers, and
wherein said cooler further comprises a pre-cooling section having an inlet and an outlet connected, one downstream of the other, to a return conduit of the cooling circuit connected to an inlet of the cooling radiator.

In the apparatus according to the invention, the circuit for cooling the engine intake air is therefore completely integrated within the engine cooling circuit; consequently no dedicated pump is required for the circuit which cools the air leaving the compressor. Additionally, some of the cooling fluid for cooling the engine, having passed through the cooling radiator, also passes through the low temperature radiator positioned downstream of the radiator, within the same heat exchange unit. These arrangements, in combination, make it possible to provide a system which is more compact and economical than the known solutions.

Preferred embodiments of the invention are defined in the dependent claims, which are to be considered as an integral part of the present description.

Further characteristics and advantages of the apparatus according to the invention will be made clearer by the following detailed description of an embodiment of the invention, given with reference to the attached drawings which are provided purely as non-limiting illustrations, in which:
- Figure 1 shows, schematically, an embodiment of a cooling apparatus for a supercharged internal combustion engine according to the invention; and
- Figure 2 is a simplified perspective view of a combined radiator that can be used in the cooling apparatus according to the invention.

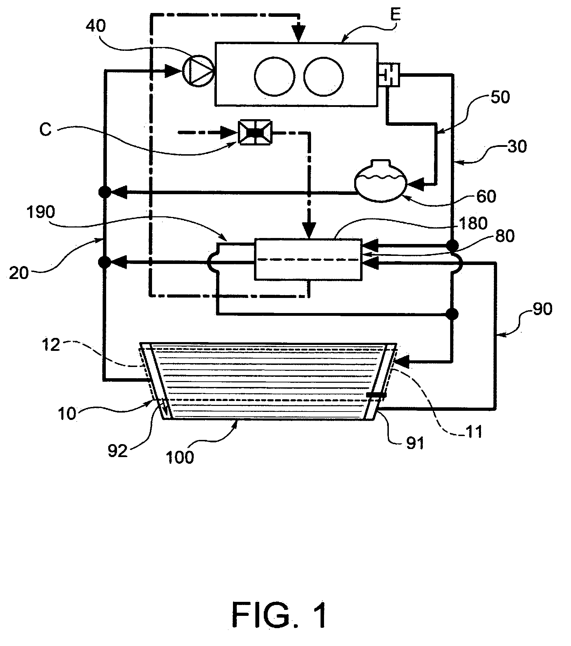

With reference to Figure 1, a description will now be given of a cooling apparatus for a supercharged internal combustion engine according to the invention, having an integrated system for cooling the engine intake air or mixture.

The cooling apparatus comprises a cooling circuit connected to a supercharged internal combustion engine E so as to circulate a cooling fluid within the engine in order to cool the engine. The cooling circuit conventionally comprises a cooling radiator 10 having an inlet 11 and a main outlet 12, which exchanges heat with external atmospheric air, an outgoing conduit 20 connected to the main outlet 12 of the radiator 10, which carries the cooled cooling fluid from the cooling radiator 10 to the engine E, and a return conduit 30 connected to the inlet 11 of the radiator 10, which carries the cooling fluid leaving the engine E to the cooling radiator 10. The cooling circuit is also conventionally provided with a pump 40 for circulating the cooling fluid between the internal combustion engine E and the cooling radiator 10, the suction side of the pump being connected to the main outlet 12 of the cooling radiator, and the delivery side of the pump being connected to the engine E.

In a conventional way, the cooling circuit further comprises a by-pass conduit 50 for warming up the engine, this conduit including, in some cases, an expansion vessel 60 which is connected upstream to a cooling fluid outlet of the internal combustion engine E, another outlet of which is connected to the return conduit 30, and is connected downstream to the outgoing conduit 20.

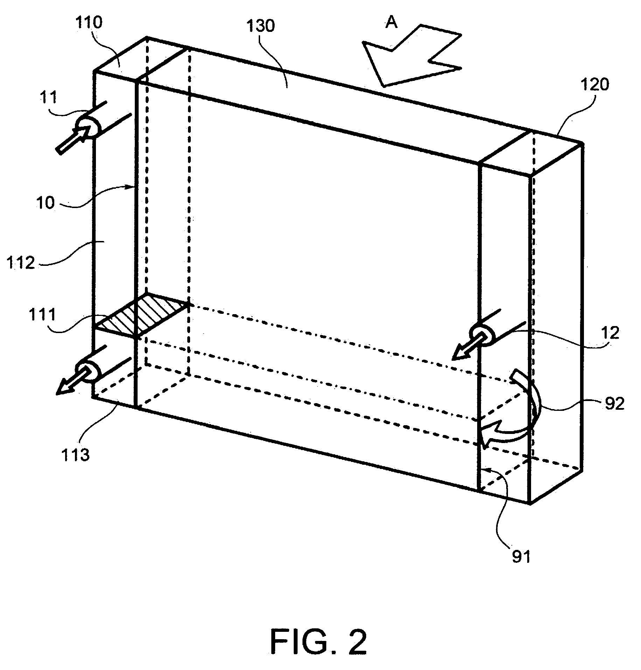

Since the internal combustion engine E is supercharged, a system is provided for treating a gaseous fluid (air or a mixture of air and recycled exhaust gas) to be supplied to the engine. The flow of this gaseous fluid is indicated by a dot-and-dash line in Figures 1 and 2. The gaseous fluid treatment system comprises a compressor C and a cooler 80 supplied with a cooling fluid for heat exchange between the gaseous fluid and the cooling fluid. According to the invention, this cooling fluid which is supplied to the cooler 80 is the same cooling fluid as that which is circulated in the engine cooling circuit.

For this purpose, the cooling apparatus further comprises a cooling conduit 90 for cooling the gaseous intake fluid for the engine E. The cooling conduit 90 comprises a low temperature radiator 91 which exchanges heat with external atmospheric air, and is positioned downstream of the cooling radiator 10. For this purpose, the cooling radiator has a secondary outlet 92 (represented in Figures 1 and 2 by an arrow drawn on one of the headers of the radiator) to which the low temperature radiator 91 is connected.

The cooling radiator and the low temperature radiator are combined in a single two-pass heat exchange unit, composed of a first and a second header and a tube bundle extending between the headers.

The cooling conduit 90 further comprises the cooler 80, which is connected to an outlet of the low temperature radiator 91. Finally, the outlet of the cooler 80 is connected to the outgoing conduit 20 of the cooling circuit, that is to say to the suction side of the pump 40, downstream of the main outlet 12 of the cooling radiator 10.

The cooler 80 further comprises a pre-cooling section 180, for the pre-cooling of the gaseous fluid obtained from the compressor. This pre-cooling section 180 is connected to a pre-cooling conduit 190, which connects an inlet and an outlet of the pre-cooling section 180 to the return conduit 30 of the cooling circuit. The connections of the outlet and inlet of the cooling section 180 to the return conduit 30 are positioned one downstream of the other.

In the configuration described above, some of the cooling fluid that passes through the cooling radiator 10 also passes through the low temperature radiator 91 for cooling the gaseous fluid that is obtained from the compressor for supply to the engine. There is a sufficient temperature difference between the gaseous fluid from the compressor and the cooling fluid to enable the compressed gaseous fluid to be cooled effectively, to a degree comparable to that achieved in systems with two separate circuits, but using only one pump.

Figure 2 shows a possible embodiment of a heat exchange unit 100 that can be used in the apparatus according to the invention. In this embodiment, the cooling radiator 10 and the low temperature radiator 91 are combined in the heat exchange unit 100, which is configured as a two-pass exchanger. The heat exchange unit 100 comprises a first and a second header 110, 120 and a tube bundle 130 extending between the headers. One part of the tube bundle, shown as the upper part in the drawing, is used as the cooling radiator 10, while the remaining part, shown as the lower part in the drawing, is used as the low temperature radiator 91. An arrow A indicates the air flow which contacts the tube bundle of the exchanger 100. The first header 110 is divided, by means of an internal partition 111, into an inlet section 112 for the cooling fluid entering the cooling radiator 10 and an outlet section 113 for the cooling fluid leaving the low temperature radiator 91. The main outlet 12 and the secondary outlet 92 of the cooling radiator 10 are formed on the second header 120; in fact, the secondary outlet 92 in this example coincides with the inlet of the low temperature radiator 91. The secondary outlet 92 is formed as a passage within the second header 120, and in practice is positioned at a level corresponding to the partition 111 of the first header. The heat carrier fluid entering the inlet section 112 is distributed in the tube bundle part of the cooling radiator 10 until it reaches the second header 120. At this point, some of the cooling fluid exits through the main outlet 12, and the remaining part passes through the secondary outlet 92 so as to be distributed through the tube bundle part of the low temperature radiator 91. The cooling fluid passes through this part in the opposite direction to the direction of movement through the tube bundle part of the cooling radiator 10, until it reaches the outlet section 113 of the first header 110.

Although the configuration shown in Figure 3 is preferable because of its relatively compact dimensions and the smaller number of components, the invention further comprises a other configurations in which the cooling radiator 10 and the low temperature radiator 91 are connected in different manners.

## Claims

1. Cooling apparatus for a supercharged internal combustion engine (E), comprising a circuit provided with a pump (40) for circulating a cooling fluid between the internal combustion engine (E) and a cooling radiator (10) which exchanges heat with external atmospheric air, said cooling radiator having a main outlet (12) connected to a suction side of said pump,
said apparatus further comprising a conduit (90) for cooling a gaseous intake fluid for said engine, said conduit comprising a low temperature radiator (91) which exchanges heat with external atmospheric air, and which is connected to a secondary outlet (92) of said cooling radiator, this outlet being different from said main outlet, and a cooler (80) which cools said gaseous intake fluid by means of a heat exchange with said cooling fluid, connected to an outlet of said low temperature radiator, an outlet of said cooler being connected to a suction side of said pump, downstream of the main outlet (12) of the cooling radiator (10);
wherein said cooling radiator and low temperature radiator are combined in a two-pass heat exchange unit (100) comprising a first and a second header (110, 120) and a tube bundle (130) extending between said headers;
said apparatus being **characterized in that** said cooler further comprises a pre-cooling section (180) having an inlet and an outlet connected, one downstream of the other, to a return conduit (30) of the cooling circuit connected to an inlet (11) of the cooling radiator (10).

2. Apparatus according to Claim 1, wherein said first header is divided into an inlet section (112) for the cooling fluid entering the cooling radiator (10) and an outlet section (113) for the cooling fluid leaving the low temperature radiator (91), and said second header includes said main outlet and secondary outlet of the cooling radiator (10), said secondary outlet being formed as a passage within the second header (120).

## Patentansprüche

1. Kühlvorrichtung für einen aufgeladenen Verbrennungsmotor (E), die einen Kreislauf umfasst, der mit einer Pumpe (40) zum Umwälzen eines Kühlfluids zwischen dem Verbrennungsmotor (E) und einem Kühlradiator (10), der Wärme mit atmosphärischer Außenluft austauscht, ausgestattet ist, wobei der Kühlradiator einen Hauptauslass (12) aufweist, der mit einer Ansaugseite der Pumpe verbunden ist,
wobei die Vorrichtung ferner eine Leitung (90) zum Kühlen eines gasförmigen Einlassfluids für den Motor, wobei die Leitung einen Niedertemperaturkühler (91) umfasst, der Wärme mit atmosphärischer Außenluft austauscht und der mit einem Sekundärauslass (92) des Kühlradiators verbunden ist, wobei dieser Auslass von dem Hauptauslass verschieden ist, und einen Kühler (80) umfasst, der das gasförmige Einlassfluid mittels eines Wärmetauschs mit dem Kühlfluid kühlt und der mit einem Auslass des Niedertemperaturkühlers verbunden ist, wobei ein Auslass des Kühlers mit einer Ansaugseite der Pumpe stromabwärts von dem Hauptauslass (12) des Kühlradiators (10) verbunden ist,
wobei der Kühlradiator und der Niedertemperaturkühler in einer Zwei-Pass-Wärmetauscheinheit (100) kombiniert sind, die ein erstes und ein zweites Endstück (110, 120) und ein Rohrbündel (130) umfasst, das sich zwischen den Endstücken erstreckt,
wobei die Vorrichtung **dadurch gekennzeichnet ist, dass** der Kühler ferner einen Vorkühlabschnitt (180) umfasst, der einen Einlass und einen Auslass aufweist, die, einer stromabwärts von dem anderen, mit einer Rückführungsleitung (30) des Kühlkreislaufs verbunden sind, die mit einem Einlass (11) des Kühlradiators (10) verbunden ist.

2. Vorrichtung nach Anspruch 1, bei welcher das erste Endstück in einen Einlassabschnitt (112) für das Kühlfluid, das in den Kühlradiator (10) eintritt, und einen Auslassabschnitt (113) für das Kühlfluid, das den Niedertemperaturkühler (91) verlässt, aufgeteilt ist, und das zweite Endstück den Hauptauslass und den Sekundärauslass des Kühlradiators (10) umfasst, wobei der Sekundärauslass als ein Durchgang innerhalb des zweiten Endstücks (120) ausgebildet ist.

## Revendications

1. Appareil de refroidissement pour un moteur à combustion interne suralimenté (E), comprenant un circuit doté d'une pompe (40) pour la circulation d'un fluide de refroidissement entre le moteur à combustion interne (E) et un radiateur de refroidissement (10) qui échange de la chaleur avec de l'air atmosphérique externe, ledit radiateur de refroidissement présentant une sortie principale (12) reliée à un côté d'aspiration de ladite pompe,
ledit appareil comprenant en outre un conduit (90) pour le refroidissement d'un fluide d'entrée gazeux pour ledit moteur, ledit conduit comprenant un radiateur basse température (91) qui échange de la chaleur avec de l'air atmosphérique externe, et qui est relié à une sortie secondaire (92) dudit radiateur de refroidissement, cette sortie étant différente de ladite sortie principale, et un refroidisseur (80) qui refroidit ledit fluide d'entrée gazeux à l'aide d'un échange de chaleur avec ledit fluide de refroidissement, relié à une sortie dudit radiateur basse température, une sortie dudit refroidisseur étant reliée à un côté d'aspiration de ladite pompe, en aval de la sortie principale (12) du radiateur de refroidissement (10) ;
dans lequel ledit radiateur de refroidissement et le radiateur basse température sont combinés dans une unité d'échange de chaleur deux passes (100) comprenant un premier et une second collecteurs (110, 120) et un faisceau de tube (130) s'étendant entre lesdits collecteurs ;
ledit appareil étant **caractérisé en ce que** ledit refroidisseur comprend en outre une section de prérefroidissement (180) présentant une entrée et une sortie reliées, l'une en aval de l'autre, à un conduit de retour (30) du circuit de refroidissement relié à une entrée (11) du radiateur de refroidissement (10).

2. Appareil selon la revendication 1, dans lequel ledit premier collecteur est divisé en une section d'entrée (112) pour le fluide de refroidissement entrant dans le radiateur de refroidissement (10) et une section de sortie (113) pour le fluide de refroidissement quittant le radiateur basse température (91) et ledit second collecteur inclut lesdites sortie principale et sortie secondaire du radiateur de refroidissement (10), ladite sortie secondaire étant formée comme un passage dans le second collecteur (120).
